# EUROPEAN PATENT APPLICATION

(11) **EP 1 780 974 A1**
(43) Date of publication of application: **02.05.2007**
(21) Application number: 05300863.7
(22) Date of filing: 26.10.2005
(51) Int. Cl.: H04L 29/06

(54) **Improved communication handling**

(71) Applicant: Hewlett-Packard Development Company, L.P., Houston, TX 77070 (US)
(72) Inventor: Hyerle, Robert HP Centre de Competences France, 38023, Grenoble Cedex 09 (FR)
(74) Representative: Franks, Adam Peter

(57) **Abstract**

According to one aspect of the present invention, there is provided a method of handling a communication sent to a destination terminal comprising receiving the communication and an associated communication handling package, determining whether the handling package can be trusted; and where it is so determined, processing the communication in accordance with the communication handling package.

## Description

The present invention relates generally to the field of communications and, more particularly, to improvements in the way communications are handled.

Today there exists a multitude of different electronic communication techniques including the telephone, email, instant messaging, short message system (SMS) messages, to name but a few. Some forms of communications, such as telephone communications, lead to the establishment of a communication session or path, e.g. a telephone call, enabling two or more parties to communicate in real time. Other forms of communication, such as email and SMS, enable one party to send an electronic message to one or more third parties, with no guarantee of when, or even if, the destination parties will receive the message or respond thereto.

Most forms of electronic communication, such as those described above, are initiated by one party to either cause a communication, such as an email message, to be sent to a third party, or to cause a communication request, such as a call or session establishment request, to be sent to a third party. Hereinafter, both a communication and a communication request will be referred to simply as a communication.

Typically a party to which a communication is destined has little control over whether the communication is received or not. For example, if an email is sent to a user having a given email address the email will be received by the email client application used by that user. Similarly, if a telephone call is placed to the user, the user's telephone handset will typically ring, allowing the user to decide whether or not to answer the call.

Additional control mechanisms, however, are available. For example, in an email system a user can use local email filters to automatically remove email messages from predetermined senders, or containing predetermined content.

However, typically such filtering is performed by the user's local email client application once the email has been received. Email filtering is also possible at the user's network email server, but this requires the network email server to store data on filtering parameters, blocked senders and the like.

In telephone systems a user may implement call barring, for example, which prevents, at a network level, calls being connected to the user's telephone handset if they appear on a list of banned callers. However, such systems also require the storing of data in the network and require users to suitably configure network-based equipment.

However, such systems are not flexible, require network or local storage, and only enable basic filtering or rules to be applied.

Accordingly, one aim of the present invention is to overcome, or at least alleviate, at least some of the above-mentioned problems.

According to a first aspect of the present invention, there is provided a method of handling a communication sent to a destination terminal. The method comprises receiving the communication and an associated communication handling package, determining whether the handling package can be trusted; and where it is so determined, processing the communication in accordance with the communication handling package.

Advantageously the method enables a destination element to influence the way in which communications send to the destination element are handled in a simple, safe and secure manner.

The communication may be one of a communication or a communication establishment request.

Suitably the handling package contains details of how to handle the communication.

The step of determining whether the handling package can be trusted may includes at least one of: determining whether the handling package was generated by or on behalf of the destination terminal; determining whether the handling package has been modified since its creation; and determining whether a trust relationship exists between the handling package and the destination terminal.

Suitably, the handling package includes data which has the ability to affect or otherwise influence the way in which the communication is handled.

The handling package may include at least one of: executable code; interpretable code; configuration data; and mark-up language data.

The handling package may include a use restriction, whereby the method further comprises verifying whether the communication may be handled in accordance with the handling package.

The method may be adapted for use with a session initiation protocol SIP telephony system in which case the step of receiving a communication may comprise receiving a SIP INVITE message containing a call handling package.

The method may be adapted for use with an email system in which case the step of receiving a communication may comprise receiving an email message containing a call handling package.

According to a second aspect of the present invention, there is provided apparatus for processing a communication. The apparatus comprises a receiver for receiving a communication and an associated communication handling package, processing logic for determining whether the handling package can be trusted, and a processor for, where it is so determined, processing the communication in accordance with the communication handling package.

Suitably, the receiver is adapted for receiving one of a communication and a communication establishment request.

Suitably, the communication handling package contains details of how to handle the communication, the processor being adapted for processing the communication in accordance with those details.

The processing logic may be arranged to determine whether the handling package can be trusted by any one or more of: determining whether the handling package was generated by or on behalf of the destination terminal; determining whether the handling package has been modified since its creation; and determining whether a trust relationship exists between the handling package and the destination terminal.

The handling package suitably includes data which has the ability to affect or otherwise influence the way in which the communication is handled and whereby the processor may be adapted to process at least one of: executable code; interpretable code; configuration data; and mark-up language data.

The handling package may include a use restriction in which case the processing logic may be further adapted to verify whether the communication may be handled in accordance with the handling package.

Suitably, the apparatus may be adapted for use with a session initiation protocol SIP telephony system, in which case the receiver may be adapted for receiving a SIP INVITE message containing a call handling package.

Suitably, the apparatus may be adapted for use with an email system, in which case the receiver is adapted for receiving an email message containing a call handling package.

According to a third aspect of the present invention, there is provided a method of sending a communication to a communication handling element of a network. The method comprises obtaining a generated call handling package, the call handling package including details of how the communication should be handled by the communication handling element, initiating a communication, and including the obtained call handling package with the communication.

According to a fourth aspect of the present invention, there is provided apparatus for sending a communication to a communication handling element arranged to operate in accordance with the above-described method steps.

Embodiments of the present invention will now be described, by way of non-limiting example only, with reference to the accompanying drawings, in which:
Figure 1 is a block diagram showing a simplified view of a generic communication system according to the prior art;
Figure 2 is a block diagram showing a simplified view of a communication system according to one embodiment of the present invention;
Figure 3 is a flow diagram outlining example processing steps that may be taken by a user terminal according to one embodiment of the present invention;
Figure 4 is a flow diagram outlining further example processing steps that may be taken by a user terminal according to one embodiment of the present invention;
Figure 5 is a block diagram showing a simplified view of a session initiation protocol (SIP) telephone system according to one embodiment of the present invention; and
Figure 6 is a message flow diagram outlining example messages that may flow between different elements of the system of Figure 5.

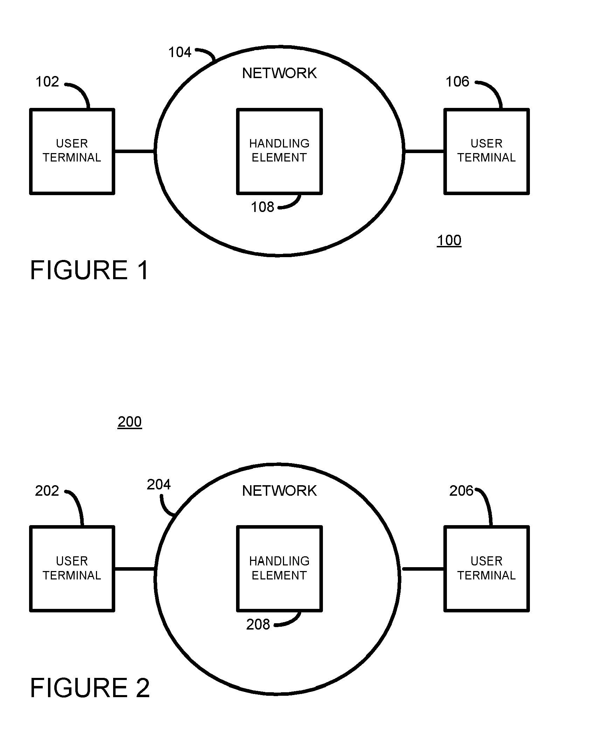

Referring now to Figure 1 there is shown a block diagram of a generic communication system 100 according to the prior art. The communication system 100 comprises user terminals 102 and 106 which are connected to a network 104 enabling a communication to be sent or established between a source terminal, such as the terminal 102, initiating the communication and a destination terminal, such as the terminal 106, receiving the communication.

The communication is sent from the source terminal 102 to a handling element 108 within the network 104. The handling element uses information in the communication, such as an address of the destination terminal, to process or handle the communication, such as by routing the communication to the destination terminal 106. A communication network 104 may include one or more handling elements and a communication may be handled by one or more handling elements before the communication is received by the destination terminal 106.

For example, if the communications system 100 were a telephony system the user terminals 102 and 106 may be suitable telephone handsets, the network 104 may be a suitable telephone network comprising an originating switch and a terminating switch, and the communication may be a call establishment request. In a telephone network, for example, a switch routes a call based on information contained in the call establishment request, such information including the telephone subscriber numbers of the calling handset 102 and the called handset 106.

If the communications system 100 were a computer network the user terminals 102 and 106 may be suitable computing devices, the network 104 may be a suitable computer network, the handling element 108 may be a router, an email server, or the like, the communication may be an email, and the handling element 108 may handle the email based, for example, on the email address of the source or the destination terminal.

As previously mentioned a destination terminal has only a limited degree of control over the way in which the communication is processed or handled either by the one or more handling elements 108 in the network 104 or how the communication is handled or processed by the destination terminal itself.

For example, if the user of the destination terminal 106 wishes to prevent communications being received from certain source terminals the user has to configure one or more of the handling elements 108 to do so. The configuration requires the storing of configuration data either at the one or more handling elements 108, or in a data store accessible to the one or more handling elements 108. The handling element may then handle the communication according to the stored data.

Similarly, if the user of the destination terminal 106 wishes to perform some local blocking, appropriate configuration data needs to be stored on the destination terminal 106 to enable to the destination terminal 106 to process communications in accordance with the stored data.

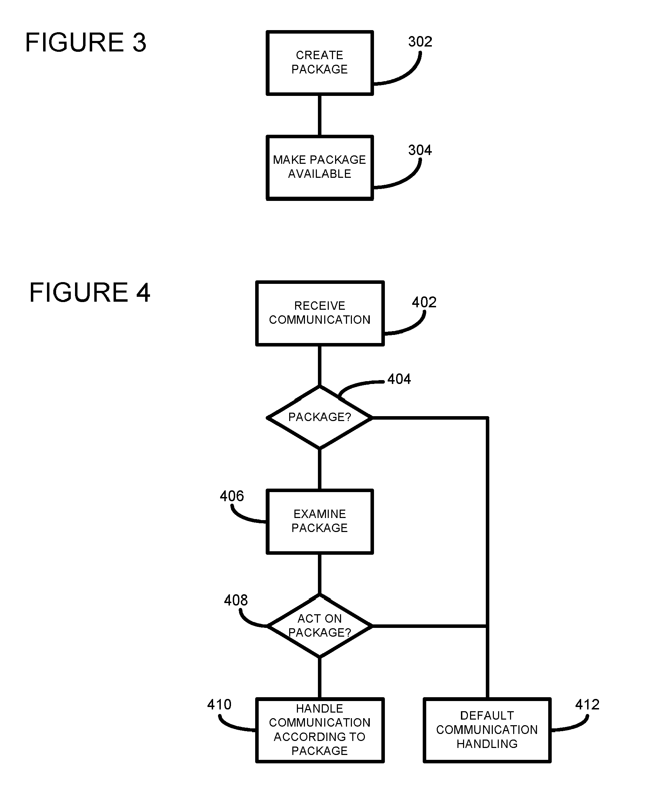

Referring now to Figure 2 there is shown a generic communication network 200 according to an embodiment of the present invention. Operation of elements of the communication network 200 are described in further detail below with additional reference to Figures 3 and 4.

Operation of the elements of Figure 2 is similar to that described above with reference to Figure 1, in that a source terminal 202 sends a communication to a destination terminal 206 via a network 204 having one or more handling elements 208.

However, the present embodiment provides the destination terminal 206 with a greater degree of control over the way in which communications are handled prior to or after being received by the destination terminal, as described below.

The user of the user terminal 206 generates, or has generated on his behalf, a communication handling package (step 302). The communication handling package (CHP) comprises data that may be used to affect or otherwise influence the way in which a communication to which the CHP is associated is handled or processed. The data may comprise executable logic, interpretable programming instructions, such as JAVA code, configuration data, or the like.

The CHP is associated with the destination terminal 206, and in a preferred embodiment the CHP has a trusted association with the destination terminal 206. The association may be achieved, for example, by having the CHP generated by the destination terminal 206. Alternatively, the CHP may be generated by the operator of the destination terminal, or on behalf of the operator of the destination terminal, for example through an Internet or other remote application. For example, the CHP could include the address or an identifier of the destination terminal to which it is associated, to prevent a CHP from being used in a communication with a different destination terminal. Additionally, the CHP may include an address or identifier of the source terminal, to prevent the CHP from being used in a communication from a different source terminal.

Preferably the CHP has a trusted association with the destination terminal 206, the trusted association being verifiable through suitable use of well known cryptographic techniques such as encryption, digital signatures, and the like, which are well know in the art and thus are not discussed further herein. If a CHP is generated on behalf of a destination terminal there is preferably a verifiable trusted relationship between the generator of the CHP and the destination terminal.

Once a CHP has been generated it can be distributed (step 304) to one or more individual users, groups of users, terminal equipment, and the like, in any suitable manner. For example, a CHP may be distributed by way of electronic mail, SMS message, a file, data stored a physical storage device such as a USB key, etc.

If a user is in possession of a CHP associated with a particular destination terminal, when the user initiates or sends a communication to that destination terminal the user may additionally send the CHP, either incorporated into the communication or sent separately therefrom.

The communication is sent to the network 204 and to a handling element 208 of the network in the conventional manner. The communication is received by a suitable receiver or receiving element (not shown) of the handling element. When the communication is received (step 402) by a handling element the communication is analysed by suitable processing logic (not shown) to determine whether it includes a CHP or whether a CHP was sent along with the communication (step 404). If no CHP is included, the communication is handled in the default manner (step 412).

If the communication does include a CHP the CHP is examined (step 406), again by the processing logic, to determine whether the element currently handling the communication should act in accordance with the CHP (step 408). If the element decides not to act on the CHP, the communication is handled in the default manner for that element (412). The step of determining whether to act on the CHP may additionally include authenticating the CHP to ensure, at least to a reasonable level, that the CHP can be trusted. This may be achieved by using various techniques including, for example, by determining whether the CHP was generated by or on behalf of the destination terminal, by determining whether a trust relation exists between the CHP and the destination terminal, or by determining that the CHP has not been modified since its creation. The step of determining whether the CHP may be trusted may include any or all of the above techniques, as well as additional techniques not mentioned.

If the handling element decides to act on the CHP, the element handles or processes the communication, through use of a suitable processor (not shown), in accordance with the CHP (step 410). Depending on the nature of the CHP, however, the CHP may cause additional or independent processing steps to be taken by the handling element, followed by which the communication is handled in the default manner, as is described further below. A handling element can be any element which handles the communication, including network-based handling elements as well as the destination terminal or source terminal.

A handling element may perform any suitable function in response to receiving a CHP in a communication. For example, the handling element may ignore the CHP, may execute all or part of the CHP, may modify the CHP, may remove the CHP, and so on. For example, if the handling element is not able to certify that the CHP was created by or on behalf of the destination terminal 206, or determines that the CHP has been modified, the handling element may remove the CHP from the communication and continue with the default communication handling (step 412).

Where a handling element authenticates or otherwise establishes that the received CHP can be trusted the handling element may add a flag or otherwise mark the CHP or the communication that the CHP has been verified. In this way, further handling elements which handle the CHP may be able to forego such an authentication step.

A CHP may be limited or restricted in use, for example, by having an expiration date after which the CHP is ignored by any handling element, or by arranging the CHP to be only useable a predetermined number of times.

The enforcement of a limited use CHP may be performed by any handling element, but is preferably carried out by the first handling element which handles the CHP. In this way, if a CHP is received which is no longer valid it may be removed from the communication prior to the communication being forwarded to any further handling elements, or the communication may be terminated prior to completion of the communication.

Information on any limiting nature applicable to a CHP may be stored in a remotely available database (not shown). A limited use CHP may contain, for example, an address of a remote database together with a identifier uniquely identifying the CHP, or at least uniquely identifying a CHP associated with a given destination terminal. The step of examining the CHP (step 406) may thus include the step of requesting the remote database to authorize use of the CHP based on the CHP identifier. Thus, if the first time a one-time use CHP is used authorization will be given, whereas subsequent attempts to use the same one-time CHP will result in authorization being refused. If authorization to use a CHP is refused a handling element may either refuse the communication or may remove the CHP from the communication and continue with the default communication handling. Preferably the database only stores details of currently valid CHPs, with any CHP not in the database being assumed invalid. If a CHP does not include an address of a remote database it may be assumed that the CHP has no such limitations imposed thereon.

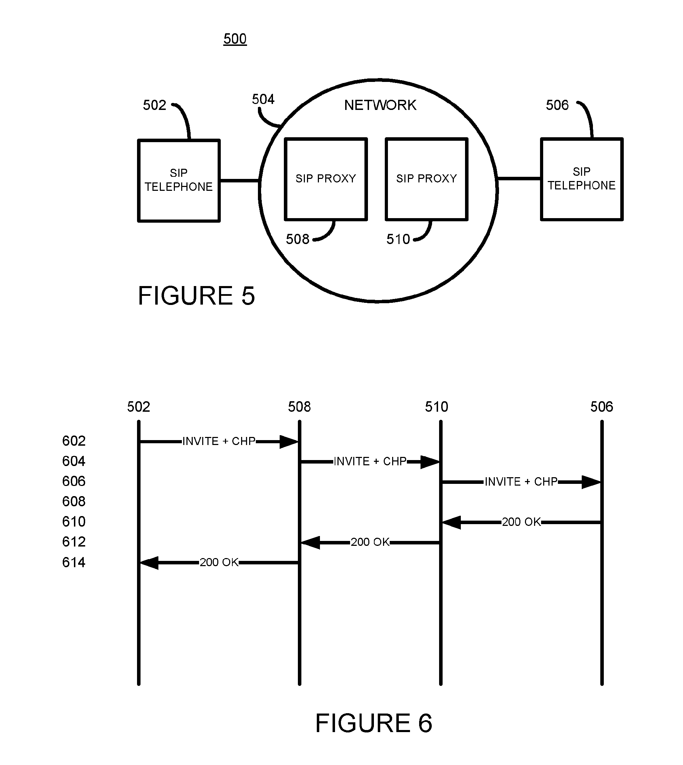

A further embodiment for use with a session initiation protocol (SIP) telephony system is now described with reference to Figures 5 and 6.

Figure 5 is a block diagram showing an overview of a SIP telephony system 500. The telephony system 500 comprises SIP telephones 502 and 506 which are operable to make SIP-based telephone calls to each other over a SIP network 504. The SIP network 504 includes two SIP proxy servers 508 and 510 which are operable to route call establishment requests between the SIP telephones 502 and 506, as is well known in the art.

As described above the user of the SIP telephone 506 has created a call handling package (CHP). In the present embodiment the CHP is an 'urgent call' package which enables a caller using the CHP when calling the SIP telephone 506 to cause any communication currently in progress on the SIP telephone 506 to be disconnected, thereby ensuring that the call will be connected to the SIP telephone 506.

For example, the user of the SIP telephone 506 may create such a CHP so that a child trying to call, for example, their mother is connected to their mother even if she is already on a telephone call.

It should be noted that such functionality is different to other known priority calling schemes since in known schemes the urgency of the call is set by the caller, and not by the callee. In the present embodiment only a user in possession of a valid 'urgent call' CHP may make an 'urgent' call to a callee,

The generated CHP is supplied to the user of the SIP telephone 502 in any suitable manner, as discussed above.

When calling the SIP telephone 506 the SIP telephone 502 may, for example, be configured to search the telephone to determine whether there is a CHP stored thereon which is associated with the SIP telephone 506. If one or more CHPs are stored, the user may be asked to select which, if any, CHP to use when making the call. If the user selects a CHP the selected CHP is included in the SIP invite message (message 602) sent to the SIP proxy 508.

The CHP may be suitably included in the SIP invite message in the message body of the message. As previously discussed, the CHP may be defined in numerous ways, for example by executable or interpretable program code, XML or other marked-up description language, logical descriptions, or the like.

The SIP proxy 508 receives the SIP invite message 602 (step 402) and determines (step 404) that a CHP is included in the SIP invite message. The SIP proxy 508 examines (step 406) the CHP and determines (step 408) whether to process any or all of the data in the CHP. In the present example, the SIP proxy 508 determines not to process the CHP and the SIP invite message 602 is handled in the normal manner, in this case being forwarded to the SIP proxy 510.

Each handling element may determine whether to act on the CHP in various different ways. For example, in the present example the CHP is only intended to be executed or used at a SIP telephone. Thus a suitable parameter may be included in the CHP which defines the type of handling element which may act on the CHP.

The SIP proxy 510 receives the SIP invite message 604 and processes the message as previously described. In the present example the SIP proxy 510 decides not to process the CHP and forwards the SIP invite message 606 to the SIP telephone 506.

The SIP telephone 506 receives the SIP invite message 606 (step 402), determines that it includes a CHP (step 404) and examines the CHP (step 406). The SIP telephone 506 determines that the CHP contains data indicating a forced priority for the call and thus decides to act on the CHP (step 408) by causing all current connected calls to be dropped by the SIP telephone and, for example, causing a predetermined ring tone and alert mechanism to be activated (step 410).

In a further example, the user of the SIP telephone 506 creates a 'call me free' CHP which enables a caller to call the SIP telephone 506 for free.

The user of the SIP telephone 502 calls the SIP telephone 506 and includes the 'call me free' CHP in the communication. The SIP invite message 602 is received by SIP proxy 508 which determines that it should act on the CHP. The SIP proxy 508 then executes, interprets, parses, as appropriate, the CHP which causes the called SIP telephone 506 to be billed for the call.

Additional non-limiting example of the types of CHP that can be generated include a CHP that enables a caller to place a call to a destination terminal only during a predetermined time window, a CHP that enables a caller to place a single telephone call to a destination terminal, and a CHP that enables a caller to place a free call to destination terminal.

An example CHP described using an XML type mark-up language description is given below for illustration:

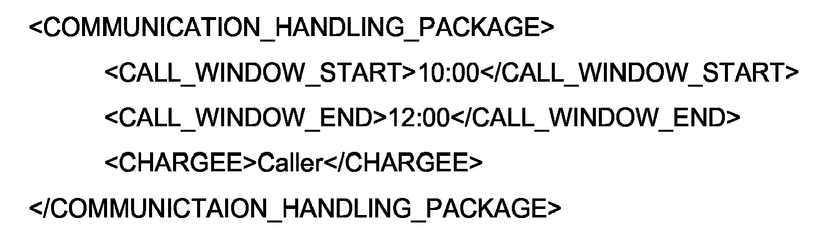

An example of the same CHP defined using an interpreted language is shown below:

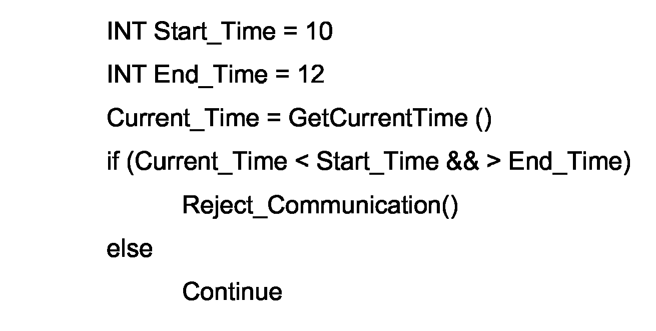

In a further example a CHP may be generated to contain a substantially unique number, such as a lottery number. A holder of such a CHP may then place a telephone call to a specified number including the lottery CHP in the call establishment request, enabling a handling element to extract the lottery number to determine whether a prize has been won.

In a further embodiment a CHP is created by a user of a destination terminal for use with email communication.

For example, the owner of a personal computer may create a CHP that causes the personal computer to be re-booted upon receiving an email containing such a CHP. In this way, the owner of the personal computer can generate a CHP and distribute it to, for example, a friend, so that the friend can cause the computing device to be re-booted, or have any other suitable function performed, by having his friend send an email attaching a suitable CHP thereto. Since the CHP is created by the owner of the computing device there it is not necessary to block the action of any CHPs since only trusted and verified CHPs may be acted on by handling elements.

In a further example, the recipient of the email may create a CHP that causes a network email server handling the email communication to send an SMS message to the mobile telephone of the recipient.

In a yet further embodiment a communication system is arranged to block all communications and only allow communications having a valid CHP authorizing the communication to be processed in the normal manner. Such a system could, for example, be used to prevent unsolicited emails being received by a user. Such a system could further increase security by associating the CHP to a source terminal, in addition to associating the CHP with a destination terminal. Such a CHP could thus be issued to a user to enable that user to send communications to the destination terminal. Without such a CHP, no communication would be possible between the source and destination terminal.

It is thus apparent that a wide range of different CHPs can be generated for use in many different types of communication system, with the examples and embodiments above being strictly non-limiting in nature.

## Claims

1. A method of handling a communication sent to a destination terminal comprising:
receiving the communication and an associated communication handling package;
determining whether the handling package can be trusted; and where it is so determined,
processing the communication in accordance with the communication handling package.

2. The method of claim 1, wherein the communication is one of a communication or a communication establishment request.

3. The method of claim 1 or 2, wherein the handling package contains details of how to handle the communication.

4. The method of claim 1, 2, or 3, wherein the step of determining whether the handling package can be trusted further includes at least one of:
determining whether the handling package was generated by or on behalf of the destination terminal;
determining whether the handling package has been modified since its creation; and
determining whether a trust relationship exists between the handling package and the destination terminal.

5. The method of any of claims 1 to 4, wherein the handling package includes data which has the ability to affect or otherwise influence the way in which the communication is handled.

6. The method of any previous claim, wherein the handling package includes at least one of: executable code; interpretable code; configuration data; and mark-up language data.

7. The method of any previous claim, wherein the handling package includes a use restriction, the method further comprising verifying whether the communication may be handled in accordance with the handling package.

8. The method of any previous claim, the method being adapted for use with a session initiation protocol SIP telephony system.

9. The method of claim 8, wherein the step of receiving a communication comprises receiving a SIP INVITE message containing a call handling package.

10. The method of any of claims 1 to 7, the method being adapted for use with an email system.

11. The method of claim 11, wherein the step of receiving a communication comprises receiving an email message containing a call handling package.

12. Apparatus for processing a communication comprising:
a receiver for receiving a communication and an associated communication handling package;
processing logic for determining whether the handling package can be trusted; and
a processor for, where it is so determined, processing the communication in accordance with the communication handling package.

13. The apparatus of claim 12, wherein the receiver is adapted for receiving one of a communication and a communication establishment request.

14. The apparatus of 12 or 13, the communication handling package containing details of how to handle the communication, the processor being adapted for processing the communication in accordance with those details.

15. The apparatus of claim 12, 13 or 14, wherein the processing logic is arranged for determining whether the handling package can be trusted by any one or more of:
determining whether the handling package was generated by or on behalf of the destination terminal;
determining whether the handling package has been modified since its creation; and
determining whether a trust relationship exists between the handling package and the destination terminal.

16. The apparatus of any of claims 12 to 15, wherein the handling package includes data which has the ability to affect or otherwise influence the way in which the communication is handled and wherein the processor is adapted to process at least one of: executable code; interpretable code; configuration data; and mark-up language data.

17. The apparatus of any of claims 12 to 16, wherein the handling package includes a use restriction, the processing logic being further adapted for verifying whether the communication may be handled in accordance with the handling package.

18. The apparatus of any of claims 12 to 17, the apparatus being adapted for use with a session initiation protocol SIP telephony system.

19. The apparatus of claim 18, wherein the receiver is adapted for receiving a SIP INVITE message containing a call handling package.

20. The apparatus of any of claims 12 to 17, the apparatus being adapted for use with an email system.

21. The method of claim 20, wherein the receiver is adapted for receiving an email message containing a call handling package.

22. A method of sending a communication to a communication handling element of a network comprising:
obtaining a generated call handling package, the call handling package including details of how the communication should be handled by the communication handling element;
initiating a communication; and
including the obtained call handling package with the communication.

23. Apparatus for sending a communication to a communication handling arranged to operate in accordance with the method of claim 22.
